# EUROPÄISCHE PATENTSCHRIFT

(11) **EP 3 172 156 B1**
(45) Veröffentlichungstag und Bekanntmachung des Hinweises auf die Patenterteilung: **12.12.2018**
(21) Anmeldenummer: 15730786.9
(22) Anmeldetag: 22.06.2015
(51) Int. Cl.: B65G 54/02, B65B 35/24, B65B 35/38, B65B 43/52, B65B 69/00, B65B 5/06, B65B 5/08, B65B 5/10, B65B 5/12, H02K 41/03

(54) **VORRICHTUNG ZUM ÜBERFÜHREN UND/ODER GRUPPIEREN**
APPARATUS FOR TRANSFERING AND/OR GROUPING
DISPOSITIF DE TRANSFERT ET/OU GROUPEMENT

(30) Priorität: 25.07.2014 DE 102014214696; 26.05.2015 DE 102015209618
(43) Veröffentlichungstag der Anmeldung: 31.05.2017
(73) Patentinhaber: Robert Bosch GmbH, 70442 Stuttgart (DE)
(72) Erfinder: WANNER, Hansruedi, CH-8214 Gächlingen (CH); BAECHLE, Andreas, 79736 Rickenbach (DE)
(86) Internationale Anmeldenummer: PCT/EP2015/064003
(87) Internationale Veröffentlichungsnummer: WO 2016/012171

(56) Entgegenhaltungen:
- EP-A1- 2 589 966
- WO-A1-2013/098202
- DE-A1-102011 075 445
- DE-U1- 29 620 915

## Beschreibung

Die Erfindung geht aus von einer Vorrichtung nach der Gattung des unabhängigen Anspruchs.

### Stand der Technik

Bekannt sind Transportsysteme, in welchen die Transportkörper (sogenannte Mover) im elektromagnetischen Feld nahezu reibungsfrei gelagert sind. Die regelbaren elektromagnetischen Kräfte werden sowohl für den Antrieb der Transportkörper als auch für elektromagnetische Linearlagerung oder Levitation über eine flache, elektrisch erregte Transportfläche (auch als X-Y-Stator bezeichnet) benutzt. Ein solches System ist in der WO 2013/059934 A1 beschrieben.

Aus der EP 2441307 B1 sind bereits eine Vorrichtung und ein Verfahren zum Überführen von Produkten mittels Greifern bekannt. Die Vorrichtung umfasst einen Linearmotor mit auf einer Führung verschiebbar geführten Fördermengen mit Greifarm zur zeitweiligen Aufnahme von Produkten, wobei die Führung als lineare Führungsstrecke ausgebildet ist. Die Fördermenge sind zur Aufnahme und Ablage der Produkte auf der Führungsstrecke hin und her verschiebbar, wobei bei in Fördererrichtung des Zufuhrförderbandes hintereinander in einer Linie zugeführten Produkten das Zufuhrförderband, das Abfuhrförderband und die Führungsstrecke zumindest in einem seitlichen Überlappungsbereich parallel nebeneinander angeordnet sind. Bei in Förderleistung des Zufuhrförderbandes nebeneinander in Reihen zugeführten Produkten ist das Zufuhrförderband senkrecht zum Abfuhrförderband angeordnet und das Abfuhrförderband und die Führungsstrecke sind parallel zueinander und mit dem Zufuhrförderband zumindest in einem seitlichen Überlappungsbereich nebeneinander angeordnet.

Aus der DE 10 2011 075 445 A1 ist eine Transportvorrichtung bekannt, mit einer umlaufenden Transportstrecke, welche einen Linearmotor mit einer Vielzahl von ortsfesten Spulen umfasst. Der wenigstens eine Läufer ist verfahrbar an der Transportstrecke angeordnet und mittels elektromagnetischer Kräfte bewegbar. Hierzu sind entsprechende Führungen vorgesehen.

Eine gattungsgemäße Vorrichtung zum Gruppieren von Artikeln oder Behältern ist aus der DE 102011085724 A1 bekannt.

Der Erfindung liegt die Aufgabe zugrunde, die Flexibilität der Vorrichtung weiter zu erhöhen. Die Aufgabe wird gelöst durch die Merkmale des unabhängigen Anspruchs.

### Vorteile der Erfindung

Die erfindungsgemäße Vorrichtung mit den Merkmalen des unabhängigen Anspruchs hat demgegenüber den Vorteil, dass sich die Flexibilität weiter erhöht. Dies erfolgt erfindungsgemäß dadurch, dass der Mover zumindest ein Produkt aufnimmt und/oder ablegt durch eine Bewegung des Movers mit zumindest einer vertikalen Komponente. Gerade bei einer Bewegung des Movers mit zumindest einer vertikalen Komponente können die in der Regel horizontal zugeführten Produkte von einem Transportsystem nach oben hin abgehoben werden und/oder auf das Transportsystem oder in einen von dem Transportsystem bewegten Behälter - sei es im Stillstand oder in der Bewegung des Transportsystems - abgelegt werden. Damit beeinflusst die vertikal angeordnete Antriebsfläche nicht den Transportweg des Transportsystems. Gerade durch diese Anordnung wird es möglich, dass auch ungeordnet zugeführte Produkte in der gewünschten Art und Weise durch den Mover aufgenommen und flexibel gruppiert werden können. Zudem kann eine FormatUmstellung quasi auf Knopfdruck erfolgen, so dass für jedes Produkt individuell gezielt Verpackungsschritte bzw. Verarbeitungsschritte vorgesehen werden können. Durch die Verwendung eines sogenannten Planarantriebs können die Aufnahme-und Ablagewege des das Produkt fördernden Movers individuell vorgegeben werden. Eine individuelle Anpassung auf Produktströme bzw. Behälter kann durch individuell steuerbare Mover erfolgen. Auch entlang unterschiedlicher Verarbeitungsschritte kann das Produkt nur einmal angefasst werden, so dass weitere Schnittstellen betreffend das Produkthandling unterbleiben können. Das beschriebene Konzept trägt zur mechanischen Standardisierung bei, da dasselbe Transportsystem für unterschiedlichste Verarbeitungsschritte verwendet werden kann. Bislang verwendete Systemkomponenten können entfallen, was zur Kostenreduzierung beiträgt. Das Transportsystem ist nicht mehr von einzelnen Führungen oder Ähnliches abhängig. Auch die Geschwindigkeit des Movers lässt sich individuell steuern und so an gewünschte Bewegungsprofile der weiteren Transportsysteme anpassen. Dadurch kann auch die Geschwindigkeit des Transports optimiert werden. Außerdem können unterschiedliche Transportarten wie beispielsweise kontinuierliche oder intermittierende Transportbewegungen gleichermaßen dank der Flexibilität der Mover verwendet werden. Bei einer Anordnung des Transportsystems in Linie mit dem Zuführband bzw. Ablageband/Behältertransport ist eine kontinuierliche Aufnahme bzw. Abgabe des Produkts im Fluss möglich.

Außerdem zeichnet sich die verwendete Transportvorrichtung durch eine hygienische Bauweise aus, indem auf eine vertikale Antriebsfläche zurückgegriffen wird, welche sich durch ein nach unten offenes Design auszeichnet. Dadurch lässt sich diese Anordnung leichter reinigen. Außerdem kann eine spaltenfreie Ausbildung der Antriebsfläche erreicht werden, was zusätzlich die Reinigbarkeit erleichtert.

In einer zweckmäßigen Weiterbildung ist vorgesehen, dass der Mover zumindest ein Produkt aus einem Behälter aufnimmt und/oder in einen Behälter ablegt. Dadurch werden weitere Verarbeitungsschritte in flexibler Art und Weise vorgenommen, nämlich das Be- und Entladen eines Behälters.

Erfindungsgemäß weist der Mover zumindest eine Handlingseinrichtung zur Ablage zumindest eines Produkts auf das Transportsystem und/oder zur Aufnahme von dem Transportsystem auf. Hierbei können in besonders einfacher Art und Weise ungeordnet zugeführte Produkte in bestimmte Gruppen und/oder Reihen überführt und so geordnet werden.

In einer zweckmäßigen Weiterbildung ist vorgesehen, dass der Mover sich zur Aufnahme des Produkts mit ähnlicher Geschwindigkeit und/oder Differenzgeschwindigkeit bewegt wie das Produkt. Dadurch kann ein besonders schonendes Handling des Produkts erreicht werden, da beschädigende Stöße oder Ähnliches vermieden werden können. Gleiches wird auch dadurch erreicht, dass der Mover sich zur Ablage des Produkts mit ähnlicher Geschwindigkeit und/oder Differenzgeschwindigkeit bewegt wie der Behälter bzw. das Transportsystem. Damit lässt sich eine Synchronisierung des Movers mit dem Transportsystem erreichen bei unterschiedlichen Transportarten wie intermittierend oder kontinuierlich. Damit wird gleichermaßen ein Produkthandling im laufenden Betrieb des Transportsystems oder im stehenden Zustand möglich.

Erfindungsgemäß sind mehrere Mover vorgesehen. Diese können mehrere Produkte von dem Zuführsystem aufnehmen und jeweils in eine bestimmte Position zur Gruppierung bringen in der die Produkte sich jeweils in einer definierten Lage zueinander befinden. Damit ist es für den Mover möglich, in gewünschter Art und Weise die Produkte zu gruppieren, beispielsweise in Reihen bzw. Kolonnen hintereinander oder ähnliche Anordnungen.

In einer zweckmäßigen Weiterbildung ist vorgesehen, dass mehrere Mover jeweils zumindest ein Produkt in den Behälter ablegen, vorzugsweise gleichzeitig. Dadurch wird die Ausbringung des Systems erhöht. Durch die Ablage einer ganzen Lage kann das Verschieben einzelner Produkte im Behälter bzw. auf dem Band verhindert werden.

In einer zweckmäßigen Weiterbildung ist vorgesehen, dass der Mover das Produkt greift und in seiner Orientierung ändert. Damit kann der Mover die Produkte in einer gewünschten Art und Weise, beispielsweise in Reihenform und/oder in bestimmten Gruppen, auf demselben Transportsystem, auf dem auch die Produkte zugeführt wurden, anordnen. Damit lassen sich ungeordnet zugeführte Produkte in einfacher Weise ordnen. Dadurch kann die Übergabe nun geordneter Produkte auf weitere Transportsysteme in der gewünschten Art und Weise unter spezieller Berücksichtigung der nachfolgenden Verarbeitungsschritte zielgenau durchgeführt werden.

Die Handlingseinrichtung kann auf die jeweilige Form des Produkts ausgerichtet sein zum besonders schonenden Handling oder Greifen des Produkts. Hierzu eignet sich besonders zweckmäßig, dass die Handlingseinrichtung zumindest einen Greifer und/oder zumindest eine Öffnung zum Anlegen eines Unterdrucks, vorzugsweise Vakuum, an das Produkt aufweist. Dies stellt das sichere Überführen eines Produkts sicher.

In einer zweckmäßigen Weiterbildung können zumindest zwei Mover zur Aufnahme zumindest eines Produkts zusammenwirken. Durch das Zusammenwirken zweier Mover für das Handling eines Produkts kann auf eine spezielle Formatanpassung verzichtet werden, da lediglich der relative Abstand der Mover zueinander bei unterschiedlichen Produktgrößen verändert werden muss.

In einer zweckmäßigen Weiterbildung ist vorgesehen, dass die vertikale Antriebsfläche oberhalb der Ebene des Transportsystems angeordnet ist, insbesondere quer zur Transportrichtung des Transportsystems. Damit blockiert die Antriebsfläche nicht das weitere Transportsystem.

In einer zweckmäßigen Weiterbildung sind mehrere Transportsysteme vorgesehen, die vorzugsweise übereinander angeordnet sind. Aufgrund der Bewegungsmöglichkeit der Mover mit zumindest einer vertikalen Komponente können Produkte je nach den nachfolgenden Arbeitsschritten unterschiedlichen Transportsystemen zugeführt werden. Dadurch erhöht sich die Flexibilität der Anordnung.

In einer zweckmäßigen Weiterbildung ist zumindest eine Produkterkennung bzw. Sensor im Bereich des Transportsystems vorgesehen, vorzugsweise außerhalb der Antriebsfläche. Dadurch lässt sich in besonders einfacher Art und Weise eine Positionserkennung der zu bewegenden Produkte durchführen. Dies ist gerade bei ungeordnet zugeführten Produkten vorteilhaft. Außerdem könnte die Produkterkennung auch für andere Zwecke wie beispielsweise eine Qualitätskontrolle der Produkte verwendet werden und wäre somit ohnehin bereits vorhanden.

In einer zweckmäßigen Weiterbildung ist vorgesehen, dass der Mover in Abhängigkeit von der Produkterkennung bzw. dem Sensor eine bestimmte Position anfährt, um das erkannte bzw. sensierte Produkt zu bewegen. In Verbindung beispielsweise mit der Geschwindigkeit des Transportsystems ermittelt eine Steuerung die anzufahrende Position des Movers, damit so zuverlässig das Produkt in die gewünschte Position bewegt werden kann. Damit erhöhen sich die Betriebssicherheit und Genauigkeit der Vorrichtung.

In einer zweckmäßigen Weiterbildung ist vorgesehen, dass zumindest ein Mover zumindest zwei Produkte aufnimmt und/oder ablegt. Dadurch kann ein mehrreihiges Aufnehmen und/oder Ablegen die Ausbringungsgeschwindigkeit des Gesamtsystems erhöhen.

Weitere zweckmäßige Weiterbildungen ergeben sich aus weiteren abhängigen Ansprüchen und aus der Beschreibung.

### Zeichnung

Ausführungsbeispiele der erfindungsgemäßen Vorrichtung sind in der Zeichnung dargestellt und werden nachfolgend näher beschrieben.

Es zeigen:
die Figur 1 eine perspektivische Ansicht eines Mover-Moduls mit unterschiedlich orientierten Antriebsflächen,
die Figur 2 eine perspektivische Ansicht der Vorrichtung,
die Figur 3 eine Prinzipskizze einer kontinuierlichen Produktaufnahme/- abgabe,
Figur 4 eine perspektivische Ansicht mit parallelen Transportsystemen,
Figur 5 eine Prinzipskizze einer Rückführung der Mover ohne Orientierungswechsel,
Figur 6 eine Prinzipskizze hinsichtlich unterschiedlicher Produktorientierungen,
Figur 7 eine Darstellung einer versetzten Anordnung verschiedener Mover sowie
Figur 8 eine Prinzipskizze zur mehrreihigen Ablage von Produkten in einem Behälter.

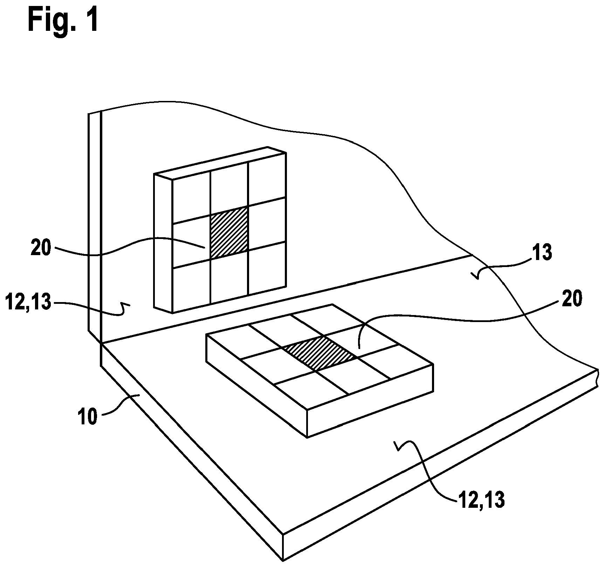

Gemäß Figur 1 umfasst eine Grundplattform 10 eine Trägerplatte 12 bzw. eine Antriebsfläche 13, auf der beweglich zumindest ein Mover 20 angeordnet ist. Bei dem Mover 20 handelt es sich um einen in der Regel passiven Mover 20, der vorzugsweise Permanentmagnete 19 umfasst, die mit Spulen an der Trägerplatte 12 bzw. Antriebsfläche 13 zur Erzeugung einer Relativbewegung zusammenwirkt. Alternativ könnte der Mover 20 jedoch auch aktiv betrieben werden, indem der Mover 20 zumindest ein Spulenpaket zur Spannungsversorgung umfasst, das mit Magnetfeld erzeugenden Mitteln (Permanentmagnete, Spulen) an der Trägerplatte 12 bzw. Antriebsfläche 13 zur Erzeugung einer Relativbewegung in geeigneter Weise zusammenwirkt. Figur 1 zeigt beispielhaft die erste Trägerplatte 12 bzw. Antriebsfläche 13, die als horizontale Ebene ausgebildet ist, sowie eine weitere hieran angrenzende Trägerplatte 12 bzw. Antriebsfläche 13, die als vertikale Ebene ausgebildet ist. Die beiden hierauf angeordneten Mover 20 sind ebenfalls eben ausgebildet und wirken mit den jeweiligen Antriebsflächen 13 so zusammen, dass eine vorzugsweise berührungslose Bewegung der Mover 20 relativ zur Antriebsfläche 13 sowohl in der Ebene der Antriebsflächen 13 in zumindest zwei Freiheitsgraden wie auch optional eine Drehung um die Normale der Antriebsfläche 13 möglich ist.

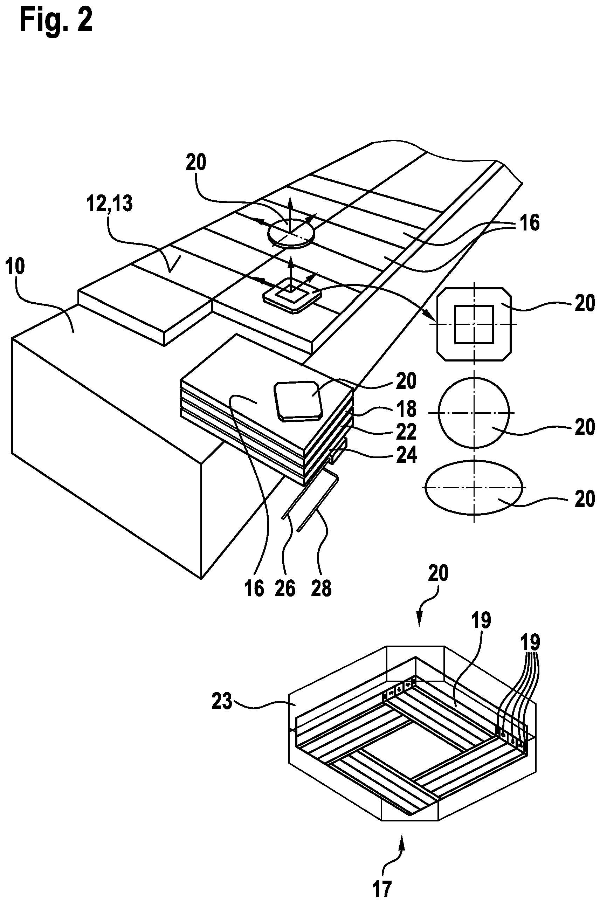

Bei dem Ausführungsbeispiel gemäß Figur 2 sind beispielhaft zwei Mover 20 dargestellt mit unterschiedlichen Grundformen, nämlich ein im Wesentlichen rechteckförmiger Mover 20 bzw. ein runder Mover 20. Auch eine ovale oder andersförmige Gestaltung wären denkbar. Die Trägerplatte 12 bzw. Antriebsfläche 13 besteht aus mehreren Einzelteilen bzw. Kacheln 16. Die Kacheln 16 sind quadratisch bzw. rechteckförmig ausgebildet. Die Kacheln 16 besitzen im Wesentlichen eine planare Oberfläche und sind schichtweise aufgebaut. Die Kachel 16 ist quadratisch bzw. rechteckförmig ausgebildet. So umfasst die Kachel 16 eine Spulenebene 18, eine Sensorebene 22 sowie eine Leistungselektronikebene 24. Weiterhin ist ein Bussystem 26 vorgesehen, welches die Kacheln 16 mit einem nicht dargestellten Zentralrechner bzw. Prozessor verbindet. Außerdem ist eine Spannungsversorgung 28 vorgesehen mit zugehörigen Anschlüssen, über die die Leistungselektronikebene 24 bzw. die Spulenebene 18 und/oder die Sensorebene 22 mit Energie versorgt werden kann.

Die Grundplattform 10 beschreibt das Basiselement. Aus dieser ergeben sich die nötigen Gestaltungsmöglichkeiten des Systems im Raum. Unter der Grundplattform 10 wird der Systemträger bzw. ein Maschinengestell verstanden. Sie muss die notwendige Steifigkeit aufweisen. Die Grundplattform 10 kann bereits Steuerungskomponenten und Leistungselektronik aufnehmen. Optional könnte auch bereits die Trägerplatte 12 bzw. Antriebsfläche 13 Bestandteil der Grundplattform 10 sein. Die Grundplattform 10 bietet die Basis oder das Element zur Anordnung weiterer Funktionseinheiten. Die Grundplattform 10 ist weiterhin die Basis oder das Element zur Anordnung weiterer Transportsysteme. Die Grundplattform 10 soll kompatibel mit anderen Grundplattformen sein. Auf der Oberfläche der Grundplattform 10 sind auf der Antriebsfläche 13 die relativ hierzu beweglichen Mover 20 angeordnet. Hierzu erzeugt die Antriebsfläche 13 bzw. die Trägerplatte 12 eine Antriebskraft, die auf den Mover 20 wirkt und ihn in die gewünschte Bewegung versetzt. Die stationäre Antriebsfläche 13 ist vorzugsweise planar ausgeführt. Der Mover 20 wird so angesteuert, dass er zumindest in zwei Freiheitsgraden verschiebbar und/oder drehbar ist. Damit lassen sich insbesondere wie nachfolgend beschrieben unterschiedliche Stationen in flexibler Weise anfahren, wenn die Antriebsfläche 13 diese in geeigneter Weise miteinander verbindet.

Der Mover 20 beschreibt das bewegbare Element der Vorrichtung. Zum einen dient der Mover 20 der Erzeugung einer Relativbewegung gegenüber der Trägerplatte 12 bzw. Antriebsfläche 13. Weiterhin erfolgt eine Interaktion zwischen den Movern 20 oder zwischen den Moverkomponenten. Weiterhin erzeugt der Mover 20 eine Kraft auf die Trägerplatte 12 bzw. Antriebsfläche 13. Hierzu umfasst der Mover 20 zumindest ein Mittel zur Erzeugung eines Magnetfelds, insbesondere zumindest einen Magneten, vorzugsweise einen Permanentmagneten 19, der mit ein Wanderfeld erzeugenden Spulen 18 der Trägerplatte 12 bzw. der Antriebsfläche 13 zur Bewegungserzeugung zusammenwirkt. Hierbei wird einen Luftspalt zwischen der Trägerplatte 12 bzw. der Antriebsfläche 13 und dem Mover 20 ausgebildet, so dass eine berührungslose Bewegung des Movers 20 relativ zur Antriebsfläche 13 erfolgen kann. Weiterhin kann der Mover 20 Mittel zur Erkennung einer Position aufweisen.

In einer Ansicht der Figur 2 ist der Mover 20 perspektivisch dargestellt. Eine Unterseite 17 des Movers 20 wirkt mit der Trägerplatte 12 bzw. Antriebsfläche 13 zusammen. An der Unterseite 17 des Movers 20 sind mehrere Permanentmagnete 19 angeordnet. Die Magnetfelder benachbart angeordneter Permanentmagnete 19 unterscheiden sich. Im Wesentlichen besteht die Unterseite 17 aus vier Feldern mit jeweils mehreren Permanentmagneten 19. Der mittlere Bereich der Unterseite 17 weist keine Permanentmagnete 19 auf. Der Mover 20 wird von einem Kollisionsschutz 23 umgeben, was bei einer Vielzahl bewegter Mover 20 vorteilhaft ist.

Die Trägerplatte 12 bzw. Antriebsfläche 13 stellt eine mehrschichtige Komponente gemäß Abbildung 2 dar. Sie weist folgende Basisfunktionalitäten auf. Zum einen umfasst sie Mittel zur Erzeugung einer Relativbewegung gegenüber dem Mover 20. Außerdem wird eine Kraft erzeugt, die auf den Mover 20 wirkt. Außerdem umfasst sie Mittel zur Erzeugung von Distanzen (Luftspalt) zwischen der Trägerplatte 12 und dem Mover 20. Außerdem umfasst die Trägerplatte 12 Mittel zur Erkennung von Positionen und Mittel zur Übertragung von Informationen.

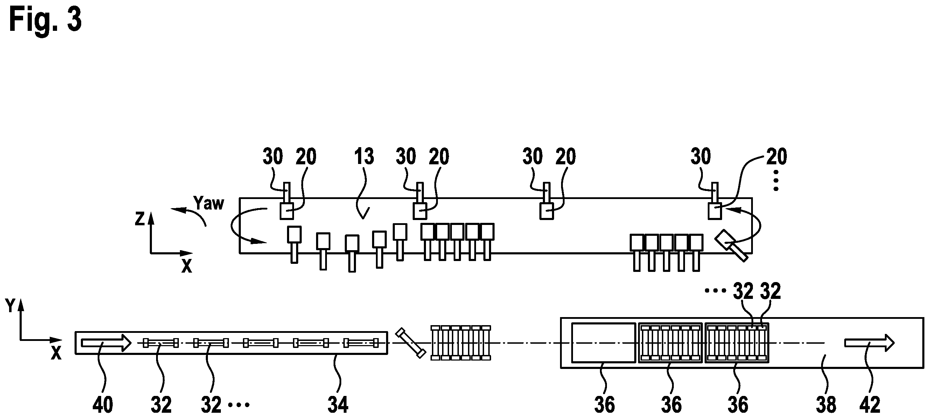

Bei dem Ausführungsbeispiel gemäß Figur 3 ist eine Draufsicht auf ein Transportsystem 34 gezeigt, welches in Transportrichtung 40 Produkte 32 fördert. Die Produkte 32 sind beispielsweise rechteckförmig ausgebildet. Ihre Längsseite verläuft parallel zur Transportrichtung 40 in X-Richtung. Das Transportsystem 34 erstreckt sich in seiner Transportfläche in der X-Y Ebene. Die Antriebsfläche 13 erstreckt sich in der X-Z Ebene, ist also in der Seitenansicht dargestellt. So könnte beispielsweise das Transportsystem 34 horizontal angeordnet sein, während die Antriebsfläche 13 vertikal angeordnet ist. Auf der Antriebsfläche 13 befinden sich eine Vielzahl von Movern 20, welche sich frei innerhalb der Antriebsfläche 13 mit zumindest einer vertikalen Komponente bewegen können wie bereits beschrieben. Der Mover 20 weist zumindest eine Handlingseinrichtung 30 auf. Die Handlingseinrichtung 30 dient der Aufnahme und/oder Bewegung und/oder Ablage des Produkts 32. Hierzu könnte die Handlingseinrichtung 30 als Greifer oder mit einer Fläche zur Erzeugung eines Unterdrucks ausgestattet sein, um form- und/oder kraftschlüssigen Kontakt mit dem Produkt 32 zu erzielen. Hierbei ist die Antriebsfläche 13 relativ zu dem Transportsystem 34 in der Weise angeordnet, dass die Mover 20 von dem Transportsystem 34 zugeführte Produkte 32 aufnehmen können. Es ist angedeutet, dass ein Mover 20 das Produkt 32 aufnimmt, in seiner Orientierung ändert sowie zusammen mit weiteren Movern 20 die Produkte 32 gruppiert. Unter Gruppieren wird verstanden, dass mehrere Produkte 32 unmittelbar nebeneinander liegend angeordnet und so in einer Gruppe zusammengefasst werden. Eine solche Gruppe wird anschließend in dem Behälter 36 abgelegt. Üblicher Weise werden hierzu die Produkte 32 so orientiert, dass deren Längsseiten nebeneinander zu liegen kommen.

Weiterhin ist ein weiteres Transportsystem 38 vorgesehen. Auf diesem Transportsystem 38 befinden sich mehrere Behälter 36. Die Mover 20 befüllen nun diese Behälter 36 mit den gruppierten Produkten 32. Hierzu bewegen sich die Mover 20 entlang der Antriebsfläche 13 mit derselben Geschwindigkeit, mit der auch der Behälter 36 von dem Transportsystem 38 bewegt wird, mit und legen die aufgenommenen Produkte 32 in dem Behälter 36 ab.

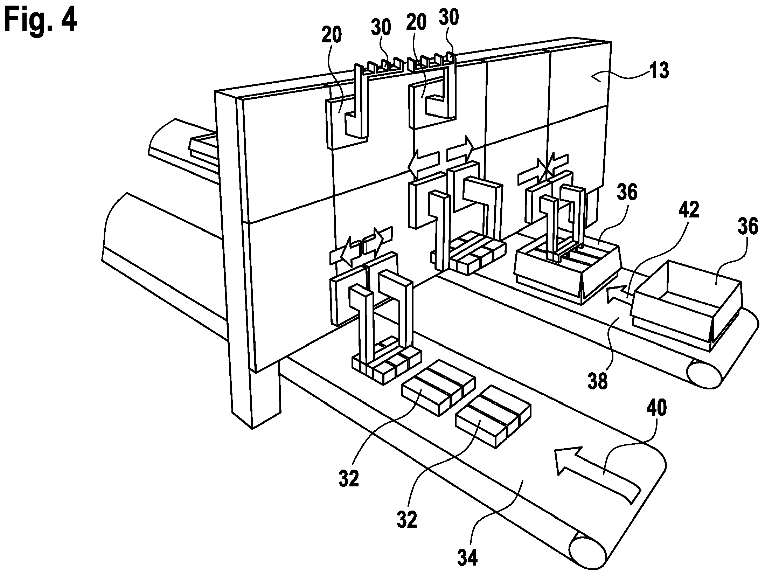

Bei dem Ausführungsbeispiel gemäß Figur 4 ist nun eine perspektivische Ansicht gewählt. Die beiden Transportsysteme 34,38 sind parallel zueinander angeordnet mit parallelen Transportrichtungen 40,42, vorzugsweise in der horizontalen Ebene. Die Antriebsfläche 13 überdeckt nun beide Transportsysteme 34,38 quer zu deren Transportrichtung 40,42. Die Antriebsfläche 13 ist etwas oberhalb der Oberseite der Transportsysteme 34,38 angeordnet in der Weise, dass die Mover 20 in der Lage sind, zugeführte Produkte 32 mit zumindest teilweiser Vertikalbewegung aufzunehmen und in dem Behälter 36 abzulegen. Befüllte Behälter 36 werden durch das weitere Transportsystem 38 unterhalb der Antriebsfläche 13 in durchgeführt zu möglichen weiteren Bearbeitungsstationen.

Beispielhaft ist gezeigt, dass zwei Mover 20 zusammen jeweils eine Gruppe zugeführter Produkte 32 greifen bzw. aufnehmen, diese zu dem weiteren Transportsystem 38 transportieren und in dem dort zugeführten Behälter 36 ablegen. Die Handlingseinrichtung 30 ist beispielsweise L-förmig ausgeführt und umfasst zumindest eine, vorzugsweise jedoch mehrere Aufnahmen für die Produkte 32.

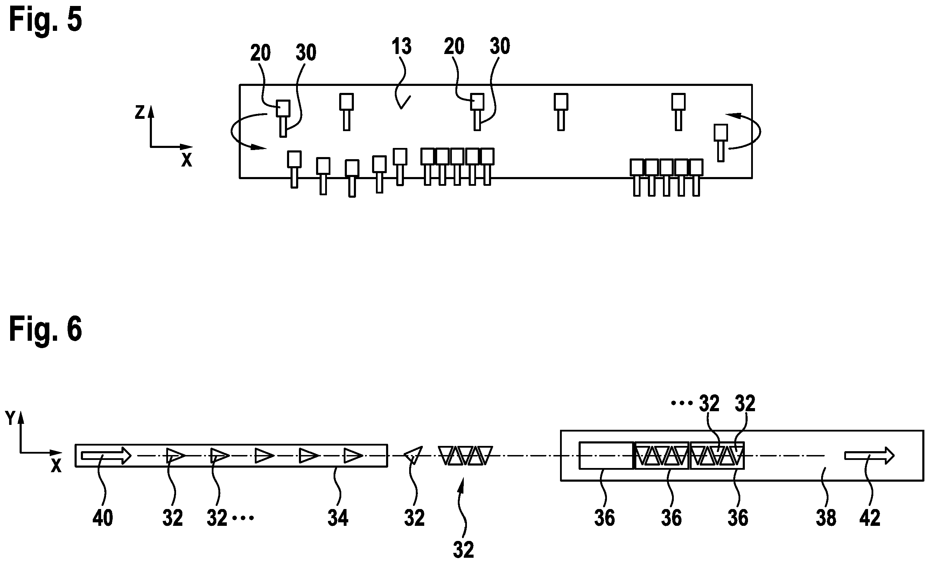

Bei dem Ausführungsbeispiel gemäß Figur 6 werden beispielsweise dreieckförmige Produkte 32 zugeführt. Die Mover 20 nehmen jeweils ein Produkt 32 mit einer zumindest teilweisen Vertikalbewegung auf und orientieren dieses jeweils abwechselnd quer zur Transportrichtung 40, einmal mit der Spitze nach vorne, einmal mit der Spitze nach hinten. Die so gruppierten Produkte 32 werden von den Movern 20 aufgenommen und in den von dem Transportsystem 38 bereitgestellten Behälter 36 überführt. Die Mover 20 werden im oberen Bereich der Antriebsfläche 13 von der Abgabeposition wie rechts unten dargestellt in die Entnahmeposition wie links unten zu sehen überführt. Hierbei bleibt die Handlingseinrichtung 30 immer nach unten hin zu den Produkten 32 orientiert wie dies beispielhaft in Figur 5 dargestellt ist.

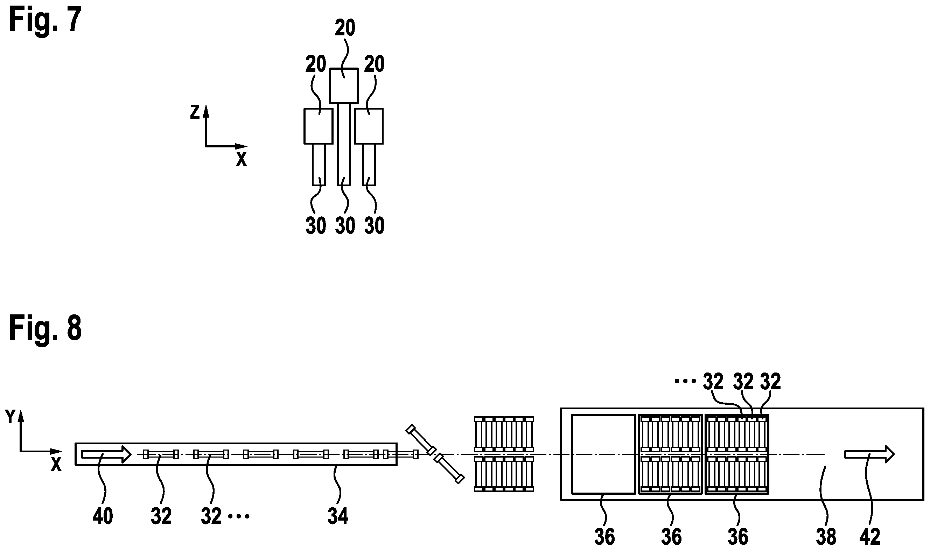

Bei dem Ausführungsbeispiel gemäß Figur 7 sind die Mover 20 jeweils in Z-Richtung versetzt zueinander angeordnet. Dadurch wird es möglich, dass die Handlingseinrichtungen 30 einen geringeren Abstand X-Richtung zueinander aufweisen können. Dadurch lassen sich engere Produktgruppierungen erreichen. Hierzu ist jedoch die Länge der Handlingseinrichtungen 30 so anzupassen, dass deren Produktaufnahmen in derselben Ebene angeordnet werden können.

Bei dem Ausführungsbeispiel gemäß Figur 8 ist die Breite des weiteren Transportsystems 38 so ausgebildet, dass größere Behälter 36 transportiert werden können, damit die Produkte 32 mehrreihig, insbesondere zweireihig, in einen Behälter 36 einsortiert werden können. Dabei kann ein Mover 20 ein oder mehrere Produkte 32 aufnehmen und dann gegebenenfalls drehen.

Die beschriebene Vorrichtung arbeitet wie folgt. Ein oder mehrere Zuführsysteme bzw. Transportsysteme 34 wie beispielsweise Förderbänder können verpackte oder unverpackte Produkte 32 zuführen. Diese Zuführbänder können in einem beliebigen Winkel zur Antriebsfläche 13 des Planarantriebs, bestehend aus zumindest Antriebsfläche 13 und Mover 20, zugeführt werden. Bevorzugt werden parallele Anordnungen für höhere Geschwindigkeiten, um die Nachverfolgung zu ermöglichen. Alternativ sind auch 90°-Anordnungen bevorzugt für sogenannte Assortment-Zuführungen. Ebenfalls können die Transportsysteme 34,38 in mehreren bzw. verschiedenen Ebenen angeordnet sein. Typischerweise sind die Antriebsfläche 13 senkrecht, die Transportsysteme 34,38 waagrecht angeordnet. Die Abtransportsysteme, also in den Ausführungsbeispielen das Transportsystem 38, die dem Abtransport der Produkte 32 bzw. der Behälter 36, in die die abzuführenden Produkte 32 einsortiert wurden, dienen, können ähnlich ausgestaltet sein wie die bereits beschriebenen Zuführsysteme bzw. Transportsysteme 34.

Die Vorrichtung zum Überführen und/oder Gruppieren von Produkten 32 von dem Transportsystem 34, vorzugsweise ein Zufuhrförderband, in zumindest einen Behälter 36 oder direkt auf das Transportsystem 38, vorzugsweise einer Fördervorrichtung innerhalb einer Verpackungsmaschine, erfüllt verschiedene Funktionen. Die Hauptfunktionen sind nachfolgend ausgeführt.

Produkte 32 werden vom Transportsystem 34, dem Zufuhrsystem, in eine Überführungsvorrichtung, nämlich der Planarantrieb bestehend aus zumindest Antriebsfläche 13 und Mover 20, aufgenommen. Im Falle so genannter Inline-Anwendungen geschieht dabei das Aufnehmen der Produkte 32 bevorzugt mit angeglichener Geschwindigkeit in X-Richtung (entspricht der Überführungsrichtung). Um die Produktaufnahme zu ermöglichen, wird eine überlagerte Bewegung in Z-Richtung (entspricht der Senkrechten) ausgeführt, also eine Bewegung mit zumindest einer vertikalen Komponente. Das Produkt 32 wird zum Beispiel mittels Vakuum am Mover 20 gehalten. Bei einer 90°-Anwendung wird das Produkt 32 bevorzugt im Stillstand aufgenommen und dann in Z-Richtung abgehoben, bevor es in X-Richtung weiter verfahren wird.

Während der anschließenden Verfahrbewegung können die Produkte 32 mit den Movern 20 beliebig gehandhabt werden. Beispielsweise können Produkte 32 um die Z-Achse gedreht und/oder gruppiert werden. Ebenfalls das Vorbeiführen oder Zuführen zu anderen Bearbeitungsstationen während des Transports ist denkbar. Im Falle einer Einrichtung zum Füllen der Behälter 36 kann eine Gruppe einer Lage von Produkten 32 im Behälter 36 entsprechen. Das Gruppieren geschieht durch Verzögerung der vorangehenden Produkte 32 einer Gruppe oder durch Beschleunigen der nachfolgenden Produkte 32 einer Gruppe.

Um im Falle einer Beladung von Behältern 36 die Gruppen zu bilden, kann eine Gruppe von Produkten 32 beschleunigt werden. So entsteht eine Lücke zur nachfolgenden Gruppe.

Beim Ablegen der Produkte 32 sind verschiedene Varianten möglich. Im Falle einer kontinuierlichen Übergabe werden die gebildeten Gruppen oder das jeweilige Einzelprodukt an die Geschwindigkeit der Behälter 36 oder des Transportsystems 38, vorzugsweise des Ablagebandes, angeglichen. Bei der Beladung von Behältern 36 werden bevorzugt alle Produkte 32 derselben Gruppe zeitgleich in den Behälter 36 gelegt. Dafür ist eine überlagerte Bewegung in X-und Z-Richtung notwendig. Falls in einem Behälter 36 mehr als eine Produktlage vorgesehen ist, verkürzt sich die Bewegung in Z-Richtung für jede weitere Lage jeweils um die Produkthöhe. Alternativ ist eine Abgabe der Produkte 32 im Stillstand möglich. Dazu werden einzelne Produkte 32 oder Produktgruppen abgelegt. Die Produkte 32 müssen nicht zwingend in einen Behälter 36 abgelegt werden, sondern können beispielsweise gruppiert in eine Kette oder direkt auf ein Band abgelegt werden, also direkt auf das Transportsystem 38. Dies könnte beispielsweise als Zuführung für eine Schlauchbeutelmaschine genutzt werden.

Zur weiteren Optimierung können die Bahnkurven der Produkte 32 so gewählt werden, dass die benötigte Strecke für das Überführen der Produkte 32 minimiert werden kann. Die Bahnkurven-Optimierung ist abhängig von der Anordnung der Produkte 32 auf dem Transportsystem 34, den Produktabmessungen sowie der Anordnung der Behälter 36. Die Mover 20 müssen nicht zwingend an einem bestimmten Ort die Produkte 32 aufnehmen und/oder ablegen, sondern können diese beispielsweise später aufnehmen und/oder früher ablegen und so den Weg zwischen Aufnahme-und Ablagezeitpunkt verkürzen bzw. optimieren.

Nicht alle Funktionen werden in jedem Fall benötigt. Das Drehen der Produkte 32 ist beispielsweise nur notwendig, wenn die Orientierung der Produkte 32 auf dem Transportsystem 34, insbesondere dem Zufuhrförderband, von derjenigen in den Behältern 36 abweicht.

Der Behälter 36 bezeichnet irgendeine Art von Produkthalter. Beispielsweise ist damit ein vorgeformter Karton oder Blister gemeint, welcher als Verpackung für die Produkte 32 dient. Denkbar ist aber auch ein Losesgruppieren und Stapeln von Produkten 32 auf einem Förderband ohne Behälter 36. Denkbar ist ebenfalls, dass nicht nur Beladefunktionen, sondern auch Entladefunktionen oder auch Umladefunktionen von einem Behälter 36 in einen anderen Behälter 36 mit diesem System realisiert werden können. In einer möglichen Produktanordnung bewegt sich das Produkt 32 in Längsrichtung auf dem Transportsystem 34, einem Band, wird aufgenommen, während der Verfahrbewegung gedreht und gruppiert mit veränderter Teilung in einen Behälter 36 abgelegt.

Eine alternative Anordnung könnte eine Produktaufnahme von mehreren Produktzuführungen bzw. Transportsysteme 34 beispielsweise in mehreren Ebenen vorsehen. Diese Zuführbänder sind beispielsweise untereinander angeordnet, sodass sich der Aufnahmepunkt der Produkte 32 nur in X-Richtung und in Z-Richtung, nicht aber in Y-Richtung unterscheidet.

Auch weitere Anordnungen sind denkbar. Die Produkte 32 können in Behältern 36 oder auf Transportsystemen 34,38, vorzugsweise Bänder, auf verschiedenen Transportebenen abgelegt werden. Die Anordnung der Transportsysteme 34,38 ist ähnlich einer gespiegelten Variante von mehreren Zufuhrbändern. Die Funktionsweise kann auch umgekehrt werden, das heißt Produkte 32 werden aus einem Behälter 36 genommen und auf ein Transportsystem 34 abgelegt, oder auf einem Band oder in eine Kette eingetaktet. Auf dem Weg von der Aufnahme- zur Ablageposition können Veränderungen/Manipulationen am Produkt 32 vorgenommen werden. Besonders interessant sind Veränderungen von Gerätschaften, welche auf eine synchronisierte Produktbewegung angewiesen sind. Dies könnte zum Beispiel eine Markierung oder ein Aufdruck auf das Produkt 32 durch einen Drucker, beispielsweise einen Laserdrucker sein.

Bei dem Ausführungsbeispiel gemäß Figur 3 ist der Planarantrieb vertikal angeordnet. So treibt die Antriebsfläche 13 passive magnetische Elemente, nämlich die Mover 20 an. Auf dem Planarantrieb bzw. der Antriebsfläche 13 sind für jeden Mover 20 unabhängige Bewegungen möglich. Die Bewegungen in X-Richtung mit einer Bewegung in Z-Richtung, also einer vertikalen Komponente, überlagern sich für die Produktaufnahme und die Produktablage. Bevorzugt werden Mover 20 für die Rückfahrt 180° um die Y-Achse gedreht, um die Bauhöhe der Antriebsfläche 13 zu minimieren. Die Bahnkurven werden dahingehend optimiert, dass die Systemlänge minimiert wird. Die Mover 20 können im Rücklauf als Speicherfunktion auf Stau gefahren werden, um verschiedene Formate oder Produktleistungen unabhängig von der im System befindlichen Anzahl von Movern 20 bedienen zu können. Ein Sensor erfasst die genauen Positionen der Produkte 32 auf dem Transportsystem 34, beispielsweise dem Zufuhrförderband. Dies erlaubt die Kompensation von Leerteilungen oder Positionsabweichungen bei einer kontinuierlichen Produktzuführung durch Korrekturbewegungen der Mover 20.

Bei einer Ausführungsvariante mit intermittierender Produktaufnahme bzw.-Abgabe werden die Produkte 32 im Stillstand von der Zuführung gegriffen bzw. abgelegt. Eine Anordnung der zuführenden Transportsysteme 34 ist unter beliebigem Winkel möglich. Denkbar ist auch eine Gruppierungsfunktion, so dass die Produktzufuhr und der Produkt Abtransport aus dem gleichen Transportmedium gebildet werden, beispielsweise ein Band. Eine Greifmöglichkeit kann durch Relativbewegung von zwei Movern 20 (im kontinuierlichen Betrieb möglich) erfolgen. Ebenfalls denkbar ist eine Drehbewegung um die Z-Achse mit entsprechender Kinematik. Es besteht die Möglichkeit der Greifkorrektur der Mover 20 in Y-Richtung. Außerdem können verschiedenste Kombinationsmöglichkeiten aus kontinuierlichem/intermittierendem Aufnehmen bzw. kontinuierlichem/intermittierendem Platzieren von Produkten 32 erzielt werden, beispielsweise Produkte 32 Inline im Fluss kontinuierlich aufnehmen und im Stillstand platzieren bzw. ablegen. Denkbar sind auch mehrere verschiedene Aufnahme-und Ablagepunkte, um beispielsweise sogenannte Assortment-Packungen oder Sortiervorgänge oder Zuordnungsvorgänge vorzunehmen.

Bei der Ausführungsvariante gemäß Figur 5 werden die Mover 20 ohne Orientierungswechsel zurückgefahren. Es erfolgt also keine Drehung um die Y-Achse. Der Rücktransport der Mover 20 kann auch mit konventionellen Fördermitteln bzw. Transportsystemen 34,38, beispielsweise Riemen, Kette oder Zahnriemen, ausgeführt werden. Dadurch kann eine Kostenreduktion durch eine kleinere Antriebsfläche 13 erzielt werden. Eine Bewegung in Y-Richtung kann dazu genutzt werden, um Vakuum ein- bzw. auszuschalten oder um die Produkte 32 zu drehen. Die Y-Bewegung kann somit als Aktor genutzt werden. Außerdem könnte die Bewegungen in Y-Richtung (oder auch Z-Richtung) genutzt werden, um eine selektive Manipulationen an einzelnen Produkten 32 auszuführen. Zum Beispiel könnte die Drehrichtung abhängig von der Y-Position ausgeführt werden, das heißt Produkte 32 können unterschiedlich gedreht und entsprechend sortiert abgelegt werden, je nachdem, welche Drehkulisse angefahren wird. Der Planarantrieb muss nicht rechteckig ausgeführt sein, sondern umfasst mindestens den Bewegungsumfang der Mover 20. Produkte 32 können von mehreren Transportsystemen 34,38, beispielsweise Zufuhrbänder, aufgenommen werden. Dies sind in Z-Richtung versetzt angeordnet. Die Produkte 32 können in Behälter 36 auf verschiedenen Transportebenen abgelegt werden. Die Mover 20 können in Z-Richtung versetzt zueinander angeordnet werden. So können die Produkte mit einem Abstand kleiner der Moverbreite gruppiert werden. Jeder Mover 20 nimmt zwei oder mehrere Produkte 32 auf, um durch Drehungsreihen zu bilden.

Die Vorrichtung ist Bestandteil eines flexiblen Transportsystems für unterschiedliche Transportanwendungen, insbesondere in der Verpackungstechnik von beispielsweise Pharmazeutika oder Lebensmittel. Die Verwendung ist hierauf jedoch nicht eingeschränkt.

## Patentansprüche

1. Vorrichtung zum Überführen und/oder Gruppieren von Produkten (32), umfassend zumindest ein Transportsystem (34, 38), das Produkte (32) transportieren kann, weiterin umfassend eine Antriebsfläche (13) und eine vielzahl von Movern (20) die sich auf der Antriebsfläche (13) befinden und sich frei innerhalb der Antribsfläche (13) bewegen können, wobei jeder Mover (20) zumindest einen Permanentmagnet (19) aufweist, der mit dem Mover (20) verbunden ist, wobei der Permanentmagnet (19) mit zumindest einer Spulenebene (18) der Antriebsfläche (13) zum berührungslosen Antrieb des Movers (20) zusammenwirkt, wobei die Mover (20) auf der Antriebsfläche (13) in zumindest zwei Freiheitsgraden verschiebbar und/oder drehbar angeordnet sind, und wobei jeder Mover (20) zumindest eine Handlingseinrichtung (30) aufweist zur Ablage zumindest eines Produkts (32) auf das Transportsystem (34,38) und/oder zur Aufnahme von dem Transportsystem (34,38), **dadurch gekennzeichnet dass** die Antriebsfläche (13) vertikal angeordnet ist, wobei sich die Vielzahl von Movern (20) innerhalb der Antriebsfläche (13) mit zumindest einer vertikalen Komponente bewegen können, so dass durch die Bewegung zumindest eines Movers (20) mit zumindest einer vertikalen Komponente zumindest ein Produkt auf das Transportsystem (34, 38) abgelegt oder von dem Transportsystem (34, 38) aufgenommen werden kann.

2. Vorrichtung nach Anspruch 1, **dadurch gekennzeichnet, dass** die Mover (20) zur Aufnahme zumindest eines Produkts (32) aus einem Behälter (36) und/oder zur Ablage in einen Behälter (36) ausgebildet sind.

3. Vorrichtung nach einem der vorhergehenden Ansprüche, **dadurch gekennzeichnet, dass** die Mover (20) zur Aufnahme des Produkts (32) mit ähnlicher Geschwindigkeit bewegbar ausgebildet sind wie das Produkt (32).

4. Vorrichtung nach Anspruch 2, **dadurch gekennzeichnet, dass** die Mover (20) zur Ablage des Produkts (32) mit ähnlicher Geschwindigkeit und/oder Differenzgeschwindigkeit bewegbar ausgebildet sind wie der Behälter (36) bzw. das Transportsystem (34,38).

5. Vorrichtung nach einem der vorhergehenden Ansprüche, **dadurch gekennzeichnet, dass** mehrere Mover (20) so ausgebildet sind, mehrere Produkte (32) von einem Zuführsystem (34) aufzunehmen und jeweils in eine bestimmte Position zur Gruppierung zu bringen, in der die Produkte (32) jeweils in einer definierten Lage zueinander sich befinden.

6. Vorrichtung nach Anspruch 2, **dadurch gekennzeichnet, dass** mehrere Mover (20) derart ausgebildet sind, um jeweils zumindest ein Produkt (32) in den Behälter (36) abzulegen, vorzugsweise gleichzeitig.

7. Vorrichtung nach einem der vorhergehenden Ansprüche, **dadurch gekennzeichnet, dass** die Mover (20) derart ausgebildet sind, um das Produkt (32) zu greifen und in seiner Orientierung zu ändern.

8. Vorrichtung nach einem der vorhergehenden Ansprüche, **dadurch gekennzeichnet, dass** die Handlingseinrichtung (30) zumindest einen Greifer und/oder zumindest eine Öffnung zum Anlegen eines Unterdrucks, vorzugsweise Vakuum, an das Produkt (32) aufweist.

9. Vorrichtung nach einem der vorhergehenden Ansprüche, **dadurch gekennzeichnet, dass** zumindest zwei Mover (20) so ausgebildet sind, dass die zur Aufnahme zumindest eines Produkts (32) zusammenwirken.

10. Vorrichtung nach einem der vorhergehenden Ansprüche, **dadurch gekennzeichnet, dass** das zumindest eine Transportsystem (38) zum Transport zumindest eines Behälters (36) vorgesehen ist.

11. Vorrichtung nach einem der vorhergehenden Ansprüche, **dadurch gekennzeichnet, dass** die Antriebsfläche (13) oberhalb der Ebene des Transportsystems (34, 38) angeordnet ist, insbesondere quer zur Transportrichtung des Transportsystems (34, 38).

12. Vorrichtung nach einem der vorhergehenden Ansprüche, **dadurch gekennzeichnet, dass** mehrere Transportsysteme (34,38) vorgesehen sind, die vorzugsweise übereinander angeordnet sind.

13. Vorrichtung nach einem der vorhergehenden Ansprüche, **dadurch gekennzeichnet, dass** zumindest ein Mover (20) derart ausgebildet ist, um zumindest zwei Produkte (32) aufzunehmen und/oder abzulegen.

## Claims

1. Device for transferring and/or grouping products (32), comprising at least one transporting system (34, 38) that can transport products (32), furthermore comprising a drive surface (13) and a plurality of movers (20) which are located on the drive surface (13) and are able to move freely within the drive surface (13), wherein each mover (20) comprises at least one permanent magnet (19) that is connected to the mover (20), wherein the permanent magnet (19) cooperates with at least one coil plane (18) of the drive surface (13) so as to drive the mover (20) in a contactless manner, wherein the movers (20) are arranged in such a manner that they can be displaced and/or rotated on the drive surface (13) in at least two degrees of freedom, and wherein each mover (20) comprises at least one handling device (30) for depositing at least one product (32) on the transporting system (34, 38) and/or for receiving at least one product from the transporting system (34, 38), **characterized in that** the drive surface (13) is arranged vertically, wherein the plurality of movers (20) can move within the drive surface (13) with at least one vertical component, so that at least one product can be deposited on the transporting system (34, 38) or received from the transporting system (34, 38) by means of moving at least one mover (20) with at least one vertical component.

2. Device according to Claim 1, **characterized in that** the movers (20) are embodied so as to receive at least one product (32) from a container (36) and/or to deposit at least one product in a container (36).

3. Device according to any one of the preceding claims, **characterized in that** the movers (20) are movable at a speed similar to that of the product (32) so as to receive the product (32).

4. Device according to Claim 2, **characterized in that** the movers (20) are movable at a similar speed and/or a different speed to that of the container (36) or the transporting system (34, 38) so as to deposit the product (32).

5. Device according to any one of the preceding claims, **characterized in that** multiple movers (20) are embodied in such a way as to receive multiple products (32) from a feeder system (34) and in each case be brought into a specific position for grouping purposes and in said position the products (32) are located in each case in a defined layer with respect to one another.

6. Device according to Claim 2, **characterized in that** multiple movers (20) are embodied in such a way as to deposit in each case at least one product (32) in the container (36), preferably simultaneously.

7. Device according to any one of the preceding claims, **characterized in that** the movers (20) are embodied in such a way as to grip the product (32) and change the orientation of said product.

8. Device according to any one of the preceding claims, **characterized in that** the handling device (30) comprises at least one gripper and/or at least one opening for applying a negative pressure, preferably a vacuum, to the product (32).

9. Device according to any one of the preceding claims, **characterized in that** at least two movers (20) are embodied such that the cooperate so as to receive at least one product (32).

10. Device according to any one of the preceding claims, **characterized in that** the at least one transporting system (38) is provided for transporting at least one container (36).

11. Device according to any one of the preceding claims, **characterized in that** the drive surface (13) is arranged above the plane of the transporting system (34, 38), in particular in a transverse manner with respect to the transporting direction of the transporting system (34, 38).

12. Device according to any one of the preceding claims, **characterized in that** multiple transporting systems (34, 38) are provided that are arranged preferably one above the other.

13. Device according to any one of the preceding claims, **characterized in that** at least one mover (20) is embodied in such a way as to receive and/or deposit at least two products (32).

## Revendications

1. Arrangement pour transférer et/ou grouper des produits (32), comprenant au moins un système de transport (34, 38) qui peut transporter des produits (32), comprenant en outre une surface d'entraînement (13) et une pluralité d'éléments convoyeurs (20) qui se trouvent sur la surface d'entraînement (13) et qui peuvent se déplacer à l'intérieur de la surface d'entraînement (13), chaque élément convoyeur (20) possédant au moins un aimant permanent (19) qui est relié à l'élément convoyeur (20), l'aimant permanent (19) coopérant avec au moins un plan de bobine (18) de la surface d'entraînement (13) pour l'entraînement sans contact de l'élément convoyeur (20), les éléments convoyeurs (20) étant disposés sur la surface d'entraînement (13) de manière à pouvoir coulisser et/ou tourner dans au moins deux degrés de liberté, et chaque élément convoyeur (20) possédant au moins un dispositif de manutention (30) servant à déposer au moins un produit (32) sur le système de transport (34, 38) et/ou servant à le prélever du système de transport (34, 38), **caractérisé en ce que**
la surface d'entraînement (13) est disposée verticalement, la pluralité d'éléments convoyeurs (20) pouvant se déplacer à l'intérieur de la surface d'entraînement (13) avec au moins une composante verticale, de sorte que le mouvement d'au moins un élément convoyeur (20) avec au moins une composante verticale permet de déposer au moins un produit sur le système de transport (34, 38) ou de le prélever du système de transport (34, 38).

2. Arrangement selon la revendication 1, **caractérisé en ce que** les éléments convoyeurs (20) sont configurés pour prendre en charge au moins un produit (32) depuis un contenant (36) et/ou pour le déposer dans un contenant (36).

3. Arrangement selon l'une des revendications précédentes, **caractérisé en ce que** les éléments convoyeurs (20), pour prendre en charge le produit (32), sont configurés pour pouvoir être déplacés à la même vitesse.

4. Arrangement selon la revendication 2, **caractérisé en ce que** les éléments convoyeurs (20), pour déposer le produit (32), sont configurés pour pouvoir être déplacés à la même vitesse et/ou à une vitesse différentielle par rapport au contenant (36) ou au système de transport (34, 38).

5. Arrangement selon l'une des revendications précédentes, **caractérisé en ce que** plusieurs éléments convoyeurs (20) sont configurés de manière à prendre en charge plusieurs produits (32) d'un système d'acheminement (34), et les amener respectivement dans une position de groupement déterminée, dans laquelle les produits (32) se trouvent respectivement dans une position définie les uns par rapport aux autres.

6. Arrangement selon la revendication 2, **caractérisé en ce que** les éléments convoyeurs (20) sont configurés pour déposer respectivement au moins un produit (32) dans le contenant (36), de préférence simultanément.

7. Arrangement selon l'une des revendications précédentes, **caractérisé en ce que** les éléments convoyeurs (20) sont configurés pour saisir le produit (32) et modifier son orientation.

8. Arrangement selon l'une des revendications précédentes, **caractérisé en ce que** le dispositif de manutention (30) possède au moins un préhenseur et/ou au moins une ouverture destinée à appliquer une dépression, de préférence du vide, a produit (32).

9. Arrangement selon l'une des revendications précédentes, **caractérisé en ce qu'**au moins deux éléments convoyeurs (20) sont configurés de telle sorte que les coopèrent pour prendre en charge au moins un produit (32).

10. Arrangement selon l'une des revendications précédentes, **caractérisé en ce que** l'au moins un système de transport (38) est conçu pour transporter au moins un contenant (36).

11. Arrangement selon l'une des revendications précédentes, **caractérisé en ce que** la surface d'entraînement (13) est disposée au-dessus du plan du système de transport (34, 38), notamment transversalement par rapport à la direction de transport du système de transport (34, 38).

12. Arrangement selon l'une des revendications précédentes, **caractérisé en ce que** plusieurs systèmes de transport (34, 38) sont présents, lesquels sont de préférence disposés les uns au-dessus des autres.

13. Arrangement selon l'une des revendications précédentes, **caractérisé en ce qu'**au moins un élément convoyeur (20) est configuré pour prendre en charge et/ou déposer au moins deux produits (32).
